Europäisches Patentamt

European Patent Office

Office européen des brevets

(11) Veröffentlichungsnummer : **0 129 659**
**B1**

(12) **EUROPÄISCHE PATENTSCHRIFT**

(45) Veröffentlichungstag der Patentschrift :
15.04.87

(51) Int. Cl.⁴ : **F 16 K   3/08**

(21) Anmeldenummer : 84104224.5

(22) Anmeldetag : 13.04.84

(54) Ventiloberteil für Sanitärarmaturen.

(30) Priorität : 25.06.83 DE 3323008

(43) Veröffentlichungstag der Anmeldung :
02.01.85 Patentblatt 85/01

(45) Bekanntmachung des Hinweises auf die Patenterteilung : 15.04.87 Patentblatt 87/16

(84) Benannte Vertragsstaaten :
AT BE CH FR GB IT LI NL SE

(56) Entgegenhaltungen :
EP-A- 0 088 334
DE-A- 3 127 713
DE-U- 8 120 625
US-A- 3 425 660
US-A- 4 058 289

(73) Patentinhaber : Firma Otto Flühs
Lösenbacher Landstrasse 2
D-5880 Lüdenscheid 6 (DE)

(72) Erfinder : Lange, Peter
Teutonenstrasse 80b
D-5880 Lüdenscheid (DE)

(74) Vertreter : Dörner, Lothar, Dipl.-Ing.
Stresemannstrasse 15
D-5800 Hagen (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf ein Ventiloberteil für Sanitärarmaturen mit einem in einem Ventilgehäuse befestigbaren hülsenartigen Kopfstück, das in seiner Wand Durchtrittsöffnungen und an seiner dem Wasserzulauf zugewandten Stirnseite eine Halterung für eine erste, mit mindestens einer Durchtrittsöffnung versehene Ventilsitzscheibe aus keramischem Material sowie einen über diese Stirnseite vorstehenden Dichtring aufweist, mit einer in dem Kopfstück drehbaren Spindel, an die T-förmig ein zwischen Anschlägen in dem Kopfstück drehbarer Quersteg angeformt ist, und mit einer hohlzylindrischen Hülse als Mitnehmer, die in Wandbereichen Durchtrittsöffnungen aufweist, deren der Spindel zugewandter Rand mit einer Aufnahme für den Quersteg versehen ist und an dessen dem Wasserzulauf zugewandter Stirnseite eine zweite mit mindestens einer Durchtrittsöffnung versehene Ventilsitzscheibe aus keramischem Material vorgesehen ist, die an der dem Wasserzulauf abgewandten Seite der ersten Ventilsitzscheibe anliegt und deren mindestens Durchtrittsöffnung eine durch Drehen der Spindel öffnet oder schließt.

Ein Ventiloberteil der vorgenannten Art ist in der älteren europäischen Patentanmeldung 8310-1968.2, die inzwischen als EP-A-0088334 veröffentlicht ist, beschrieben und dargestellt. Bei diesem Ventiloberteil dient der Quersteg an der Spindel der Mitnahme der hohlzylindrischen Hülse und der Anschlagbegrenzung. Er verhindert, daß die Spindel aus dem Kopfstück nach außen herausgenommen werden kann. Trotzdem kann die Spindel auf einfache Weise als Drehteil hergestellt werden. Die Hülse gewährleistet eine unbeeinträchtigte Wasserführung unter Ausnutzung der ganzen Fläche der keramischen Ventilsitzscheiben. Bei dem älteren Ventiloberteil sind jeweils zwei sektorförmig ausgebildete, diametral sich gegenüberliegende Ausnehmungen in den Ventilsitzscheiben vorgesehen. Zum vollständigen Öffnen und Schließen der Ausnehmungen ist eine Drehbewegung der Spindel zwischen den Anschlägen von jeweils 90° notwendig. Dies grenzt die Feinstufigkeit der Einstellung unnötig ein.

Hier will die Erfindung Abhilfe schaffen. Die Erfindung, wie sie in den Ansprüchen gekennzeichnet ist, löst die Aufgabe, das Ventiloberteil der genannten Art so auszubilden, daß ein größerer Winkel als 90° für die Drehbewegung der Spindel zwischen vollständiger Offen- und Schließstellung zur Verfügung steht.

Die durch die Erfindung, wie sie in den Ansprüchen gekennzeichnet ist, erreichten Vorteile sind im wesentlichen darin zu sehen, daß die Drehung der Spindel um 180° zwischen vollständiger Offen- und Schließstellung möglich ist; denn nur das andere Ende des Querstegs schlägt an die Anschläge an. Das eine mit der Aussparung versehene Ende überstreicht die Anschläge; es dient nur noch der symmetrischen Mitnahme der hohlzylindrischen Hülse. Eine feinstufigere Verstellung des Ventiloberteils ist die Folge.

Im folgenden wird die Erfindung anhand einer lediglich einen Ausführungsweg darstellenden Zeichnung näher beschrieben. Es zeigt:

Figur 1 ein Ventiloberteil im Längsschnitt;

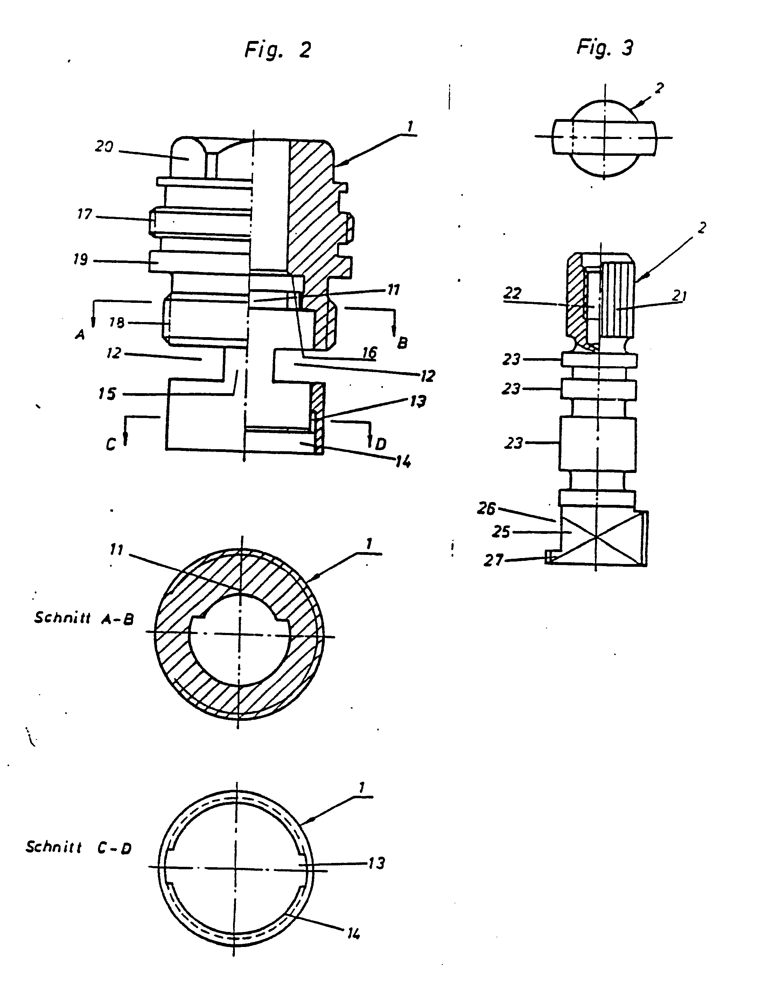

Figur 2 das bei dem in Fig. 1 dargestellten Ventiloberteil verwendete Kopfstück in Seitenansicht und Längsschnitt sowie zwei Querschnitten;

Figur 3 die bei dem in Fig. 1 dargestellten Ventiloberteil verwendete Spindel in Seitenansicht, teilweise im Längsschnitt sowie in einer Stirnansicht;

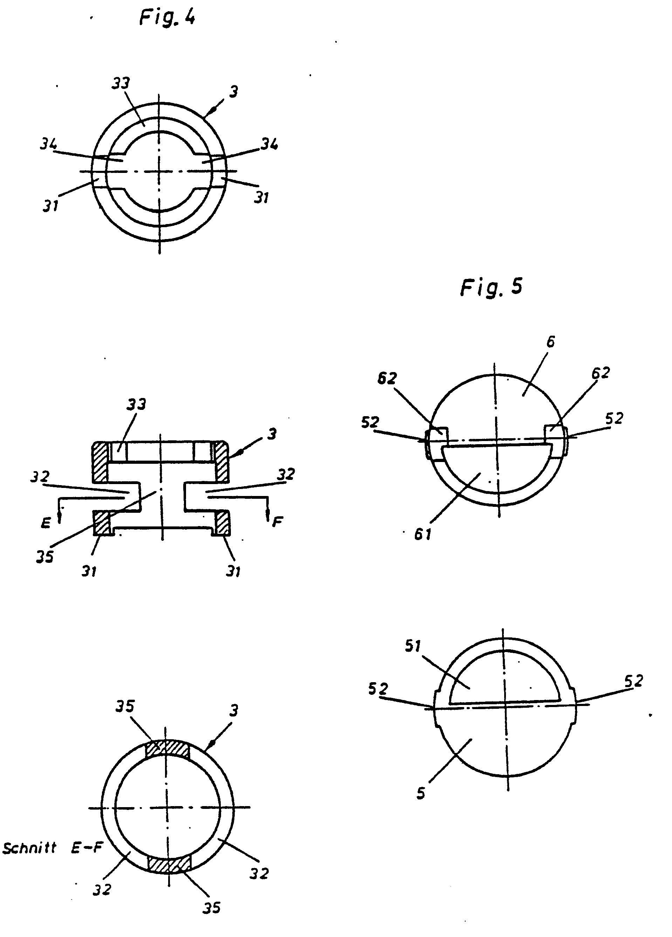

Figur 4 den bei dem in Fig. 1 dargestellten Ventiloberteil verwendeten Mitnehmer im Längsschnitt, einer Stirnansicht und einem Querschnitt;

Figur 5 die Stirnansichten der aneinanderliegenden Ventilsitzscheiben bei völliger Offenstellung.

Das als Ausführungsbeispiel gewählte Ventiloberteil weist drei miteinander verschraubte oder gegeneinander geführte Teile auf, nämlich ein Kopfstück 1, eine das Kopfstück 1 mittig durchsetzende und in ihm radial geführte Spindel 2 sowie einen mit der Spindel 2 formschlüssig verbundenen und im Kopfstück 1 radial geführten Mitnehmer 3. Das Ventiloberteil wird in ein Gehäuse 4 einer Sanitärarmatur geschraubt, von der nur ein Teil des Wasserzulaufkanals dargestellt ist.

Das Kopfstück 1 ist hülsenartig ausgebildet, besteht also aus einem symmetrischen Hohlkörper, allerdings mit unterschiedlichen Innendurchmessern, dessen beide Stirnflächen offen sind.

Wasserzulaufseitig weist das Kopfstück 1 im Bereich der Stirnseite eine Halterung für eine erste Ventilsitzscheibe 5 und einen über die Stirnseite vorstehenden Dichtring 7 auf. Die Ventilsitzscheibe 5 ist in der Ansicht kreisförmig. Sie weist eine halbkreisförmige Durchtrittsöffnung 51 auf. In der Verlängerung des die Durchtrittsöffnung begrenzenden Durchmessers sind radiale Vorsprünge 52 an der Ventilsitzscheibe 5 vorgesehen. Im Anschluß an die Stirnseite sind in dem Kopfstück 1 Durchtrittsöffnungen 12 vorgesehen. Zur Halterung ist die Innenwandung des Kopfstücks 1 im Anschluß an die zulaufseitige Begrenzung der Durchtrittsöffnungen 12 mit in Längsrichtung verlaufenden Ausnehmungen 13 für die Aufnahme der radialen Vorsprünge 52 am Rand der keramischen Ventilsitzscheibe 5 und am freien Ende mit einer ringförmigen Ausnehmung 14 für die Aufnahme des Dichtrings 7 versehen. Die Durchtrittsöffnungen 12 in dem Kopfstück 1 sind von einem ringförmigen Schlitz gebildet, der durch zwei Längsstege 15 unterteilt ist. Auf der dem Wasserzulauf abgewandten Seite der Durchtrittsöffnungen 12 ist das Kopfstück 1 mit zwei Schultern versehen; im Anschluß an die äußere Schulter 16 mit einer ringförmigen, durch einen nach innen vorspringenden Teilring 11 begrenzte Ausnehmung. Die Enden des Teilrings 11 bilden Anschläge.

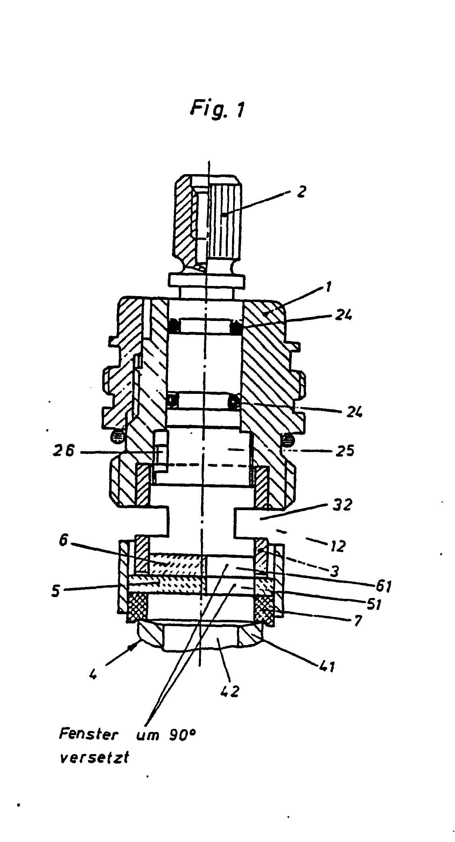

Außen ist im Anschluß an die Durchtrittsöffnungen 12 ein Außengewinde 18 vorgesehen, mit dem das Kopfstück 1 in das Gehäuse 4 einer nicht dargestellten Sanitärarmatur schraubbar ist. Nach dem Einschrauben liegt ein etwa mittig angeordneter Außenflansch 19 des Kopfstücks 1 auf dem Gehäuse 4 der Sanitärarmatur auf. Liegt der Abstand zwischen Unterseite des Außenflansches 19 und Ventilsitz im Gehäuse 4 nicht genau fest, ist es vorteilhaft, das Kopfstück 1 zweiteilig auszuführen und die Teile miteinander zu verschrauben, wie es in Fig. 1 links dargestellt ist. Das Einschrauben in die Sanitärarmatur erfolgt mittels eines Außensechskants 20, der auf der dem Wasserzulauf abgewandten Stirnseite des Kopfstücks 1 vorgesehen ist. Zwischen Außensechskant 20 und Außenflansch 19 ist ein weiteres Außengewinde 17 vorgesehen, das der Aufnahme einer nicht dargestellten Abdeckhülse dient. Von dem Außenflansch 19 bis zum Außensechskant 20 ist das Kopfstück 1 innen als Hohlzylinder für die Führung der Spindel 2 ausgebildet.

Die Spindel 2 ist im wesentlichen massiv ausgeführt und weist einen Steckkopf auf. Sie ist an ihrer dem Wasserzulauf abgewandten Stirnseite außen als Verzahnung 21 ausgeführt und innen mit einem Sackloch 22 mit Innengewinde für die Befestigung eines nicht dargestellten Drehgriffs versehen. Außen sind an der Spindel 2 Ringflächen 23 vorgesehen, mit der die Spindel 2 in dem Kopfstück 1 radial geführt ist. Die Ringflächen 23 sind durch Nuten unterbrochen, in denen Dichtringe 24 untergebracht sind, die die Dichtung zwischen Spindel 2 und Kopfstück 1 übernehmen.

Die Spindel 2 ist in dem Kopfstück 1 begrenzt drehbar. Auf der der Verzahnung 21 entgegengesetzten Seite ist zu diesem Zweck außen an die Spindel 2 ein T-förmiger Quersteg 25 angeformt. Der Quersteg 25 ist an seinem einen Ende mit einer Aussparung 26 versehen, deren Abmessungen gleich denen der Anschläge an dem Teilring 11 sind. Der Boden der Aussparung verläuft in der Verlängerung der Spindel und der verbleibende Teil des mit der Aussparung versehenen Endes des Querstegs bildet einen Vorsprung (27). Der Abstand des Vorsprungs 27 von der Mittelachse der Spindel 2 ist gleich dem Abstand des Querstegs 25 auf dem anderen Ende. Der Quersteg 25 ist in der ringförmigen Ausnehmung zwischen dem Teilring 11 in dem Kopfstück 1 drehbar. Der Quersteg 25 liegt mit seiner der Verzahnung 21 zugewandten Fläche an der Schulter 16 des Kopfstücks 1 an.

Der Mitnehmer 3 ist als hohlzylindrische Hülse mit Durchtrittsöffnungen 32 in der Wandung ausgebildet. Die Durchtrittsöffnungen 32 sind von einem ringförmigen Schlitz gebildet, der durch zwei Längsstege 35 unterteilt ist. Die Durchtrittsöffnungen 32 in dem Mitnehmer 3 und die Durchtrittsöffnungen 12 in dem Kopfstück 1 liegen in derselben Querebene. Der ringförmige Schlitz in dem Kopfstück 1 ist in Axialrichtung des Ventiloberteils breiter als der in dem Mitnehmer 3. Die Längsstege 15, 35 sind bei vollständig geöffneter und bei geschlossener Durchtrittsöffnung 51 in der ersten keramischen Ventilsitzscheibe 5 in derselben Längsmittelebene angeordnet.

Auf der dem Wasserzulauf zugewandten Stirnseite des Mitnehmers 3 ist eine zweite Ventilsitzscheibe 6 aus keramischem Material vorgesehen. An dieser Seite ist der Mitnehmer 3 mit Nocken 31 versehen, die in Ausnehmungen 62 am Rand der zweiten keramischen Ventilsitzscheibe 6 eingreifen. Die zweite Ventilsitzscheibe 6 liegt auf der dem Wasserzulauf abgewandten Seite an der ersten Ventilsitzscheibe 5 an. Sie ist mit einer halbkreisförmigen Durchtrittsöffnung 61 versehen. Die Größe der Ventilsitzscheiben 5 und 6 ist ebenso wie die ihrer Durchtrittsöffnungen 51 und 61 gleich. Die zweite Ventilsitzscheibe 6 öffnet und schließt die Durchtrittsöffnung 51 der ersten Ventilsitzscheibe 5 durch Drehen der Spindel 2.

Der der Spindel 2 zugewandte Rand 33 des Mitnehmers 3 ist mit einer Aufnahme für den Quersteg 25 der Spindel 2 versehen. Zu diesem Zweck ist der Rand 33 nach innen eingezogen und mit diametral sich gegenüberliegenden, radial verlaufenden Ausnehmungen 34 versehen, in die einerseits der Vorsprung 27, andererseits das andere Ende des Querstegs 25 der Spindel 2 selbst eingreifen. Die lichte Weite des eingezogenen Randes 33 ist kleiner als der Außendurchmesser der Ringflächen 23, deren dem Quersteg 25 benachbarte somit als Anschlag dient. Die Höhe des eingezogenen Randes 33 der hohlzylindrischen Hülse und die Höhe der von dem Teilring 11 begrenzten Ausnehmungen in dem Kopfstück 1 sind zusammen gleich der Höhe des Querstegs 25 an der Spindel 2.

Das Kopfstück 1 drückt über die erste ortsfeste Ventilsitzscheibe 5 den Dichtring 7 auf einen Ventilsitz 41 im Wasserzulauf 42 des Gehäuses 4. Nach der Befestigung des Kopfstücks 1 an dem Gehäuse bleibt die Lage des Dichtrings 7 unverändert. Durch Drehung der Spindel 2 wird die zweite Ventilsitzscheibe 6 bezogen auf die erste Ventilsitzscheibe 5 in Anlage miteinander gedreht, sodaß die Durchtrittsöffnung 51 in der ersten Ventilsitzscheibe 5 durch die zweite Ventilsitzscheibe 6 vollständig oder im gewünschten Maß geöffnet und geschlossen wird. Die Drehung der Spindel 2 ist über den Quersteg 25 und den Teilring 11 begrenzt.

## Patentansprüche

1. Ventiloberteil für Sanitärarmaturen mit einem in einem Ventilgehäuse befestigbaren hülsenartigen Kopfstück (1), das in seiner Wand Durchtrittsöffnungen (12) und an seiner dem Wasserzulauf zugewandten Stirnseite eine Halterung für eine erste, mit mindestens einer Durchtrittsöffnung (51) versehene Ventilsitzscheibe (5) aus keramischem Material sowie einen über diese Stirnseite vorstehenden Dichtring (7) aufweist, mit einer in dem Kopfstück (1) drehbaren Spindel (2), an die T-förmig ein zwischen Anschlägen in dem Kopfstück drehbarer Quersteg (25) angeformt ist, und mit einer hohlzylindrischen Hülse als Mitnehmer (3), die in Wandbereichen Durchtrittsöffnungen (32) aufweist, deren der Spindel (2) zugewandter Rand mit einer Aufnahme für den Quersteg (25) versehen ist und an dessen dem Wasserzulauf zugewandter Stirnseite eine zweite mit mindestens einer Durchtrittsöffnung (61) versehene Ventilsitzscheibe (6) aus keramischem Material vorgesehen ist, die an der dem Wasserzulauf abgewandten Seite der ersten Ventilsitzscheibe (5) anliegt und deren mindestens eine Durchtrittsöffnung (51) durch Drehen der Spindel (2) öffnet oder schließt, dadurch gekennzeichnet, daß die Ventilsitzscheiben (5 ; 6) mit je einer halbkreisförmigen Durchtrittsöffnung (51 ; 61) versehen sind und der Quersteg (25) an seinem einen Ende eine den Abmessungen der Anschläge gleiche Aussparung (26) aufweist, so daß dieses Ende die Anschläge überstreicht und das andere Ende des Querstegs zwischen den Anschlägen nur begrenzt drehbar ist.

2. Ventiloberteil nach Anspruch 1, bei dem das Kopfstück (1) mit einer Schulter (16) versehen ist, an der der Quersteg (25) mit seiner der Spindel (2) zugewandten Fläche anliegt, dadurch gekennzeichnet, daß das Kopfstück (1) im Anschluß an die Schulter (16) mit einer ringförmigen, durch einen nach innen vorspringenden Teilring (11) begrenzten Ausnehmung versehen ist.

3. Ventiloberteil nach Anspruch 1, dadurch gekennzeichnet, daß der der Boden der Aussparung in der Verlängerung der Spindel (2) verläuft und der verbleibende Teil des mit der Aussparung versehenen Endes des Querstegs (25) einen Vorsprung (27) bildet, der von der Mittelachse der Spindel (2) den gleichen Abstand hat wie der Quersteg an seinem anderen Ende.

4. Ventiloberteil nach Anspruch 1 und 3, bei dem der der Spindel (2) zugewandte Rand des Mitnehmers (3) nach innen eingezogen und mit diametral sich gegenüberliegenden, radial verlaufenden Ausnehmungen (34) versehen ist, dadurch gekennzeichnet, daß in die eine Ausnehmung (34) der Vorsprung (27), in die andere Ausnehmung das andere Ende des Querstegs (25) eingreift.

### Claims

1. Upper valve part for sanitary fittings comprising a sleeve-like head piece (1), which can be secured in a valve housing and is provided with openings (12) disposed in its wall, a mounting support disposed at its front end facing the water supply for a first valve seat disc (5) comprising at least one opening (51) and made of a ceramic material, and with a sealing ring (7) projecting beyond this front end, a stem (2), which can be rotated in the head piece (1) and onto which a crossbar (25), which can be rotated between stops in the head piece, is formed in a T-shaped manner, and a hollow cylindrical sleeve as a lifter (3) which comprises openings (32) in wall areas, the edge of which, facing the stem (2), is provided with a mounting for the crossbar (25), and the front end of which, facing the water supply, is provided with a second valve seat disc (6) which comprises at least one opening (61), is made of a ceramic material, rests against the side of the first valve seat disc (5) distant from the water supply and whose one or more opening(s) (51) open(s) or close(s) due to the rotation of the stem (2), characterised in that the valve seat discs (5 ; 6) are each provided with a semicircular opening (51 ; 61) and that one end of the crossbar (25) comprises a recess (26) having the same dimensions as the stops, so that this end sweeps over the stops and the other end of the crossbar can only be rotated to a limited degree between the stops.

2. Upper valve part according to claim 1, in which the head piece (1) is provided with a shoulder (16) against which the crossbar (25) bears with its surface facing the stem (2), characterised in that, adjacent to the shoulder (16), the head piece (1) is provided with an annular recess which is defined by an inwardly projecting partial ring (11).

3. Upper valve part according to claim 1, characterised in that the base of the recess extends in the extension of the stem (2) and the remaining part of the end, provided with the recess, of the crossbar (25) forms a projection (27) which is disposed at the same distance from the central axis of the stem (2) as the other end of the crossbar.

4. Upper valve part according to claims 1 and 3, in which the edge of the lifter (3) facing the stem (2) is turned inwards and provided with diametrically opposite recesses (34) extending in the radial direction, characterised in that the projection (27) engages in one recess (34) and the other end of the crossbar (25) engages in the other recess.

### Revendications

1. Partie supérieure de robinet pour des robinetteries de sanitaires, comportant :
une tête (1) analogue à une douille pouvant être fixée dans un corps de robinet, laquelle comporte dans sa paroi des ouvertures de passage (12), et, sur un côté frontal tourné vers l'arrivée d'eau, une fixation pour un premier siège de clapet discoïdal (5) en matériau céramique muni d'au moins une ouverture de passage (51), et un joint d'étanchéité annulaire (7) débordant au-delà de ce côté frontal,
une tige (2) pouvant tourner dans la tête (1) et sur laquelle est formé un élément transversal (25) en forme de T pouvant tourner dans la tête entre deux butées,
une douille en forme de cylindre creux en tant qu'entraîneur (3), qui comporte dans les zones de paroi des ouvertures de passage (32) dont le bord tourné vers la tige (2) est muni d'un évidement pour l'élément transversal (25), un second siège de clapet discoïdal (6) en matériau céramique, muni d'au moins une ouverture de passage (61), étant prévu sur le côté frontal des ouvertures de passage tourné vers l'arrivée d'eau, lequel second siège de clapet appuie sur le côté du premier siège de clapet discoïdal (5) opposé à l'arrivée d'eau, l'ouverture de passage (51) du premier siège de clapet s'ouvrant ou se fermant par la rotation de la tige (2), caractérisé en ce que les sièges de clapet discoïdaux (5 ; 6) sont munis chacun d'une ouverture de passage (51 ; 61) semi-circulaire, et en ce que l'élément transversal (25) comporte à une de ses extrémités un évidement (26) de même dimension que les butées, de sorte que cette extrémité passe sur les butées et que l'autre extrémité de l'élément transversal ne peut tourner que de façon limitée entre les butées.

2. Partie supérieure de robinet selon la revendication 1, dans laquelle la tête 1 est munie d'un épaulement (16) contre lequel l'élément transversal (25) appuie par sa surface tournée vers la tige (2), caractérisé en ce que la tête (1) est munie d'un évidement annulaire délimité par un anneau partiel (11) saillant vers l'intérieur, se raccordant à l'épaulement (16).

3. Partie supérieure de robinet selon la revendication 1, caractérisé en ce que le fond de l'évidement s'étend en prolongement de la tige (2) et la partie restante de l'extrémité de l'élément transversal (25) munie de l'évidement constitue une saillie (27) qui est à la même distance de l'axe médian de la tige (2) que l'élément transversal à son autre extrémité.

4. Partie supérieure de robinet selon les revendications 1 et 3, dans laquelle le bord de l'entraîneur (3) tourné vers la tige (2) rentre vers l'intérieur et est muni d'évidements (34) diamétralement opposés, s'étendant radialement, caractérisé en ce que la saillie (27) pénètre dans l'un des évidements (34), et l'autre extrémité de l'élément transversal (25) pénètre dans l'autre évidement.

# Fig. 1

Fenster um 90°
versetzt

Fig. 2

Fig. 3

20

17

19

11

18

A

B

12

16

12

15

13

C

D

14

1

2

2

22

21

23

23

23

26

25

27

11

1

Schnitt A-B

1

Schnitt C-D

13

14

*Fig. 4*

*Fig. 5*

Schnitt E–F